# FASCICULE DE BREVET EUROPEEN

(11) **EP 0 756 578 B1**
(45) Date de publication et mention de la délivrance du brevet: **25.08.1999**
(21) Numéro de dépôt: 96904157.3
(22) Date de dépôt: 16.02.1996
(51) Int. Cl.: C01B 13/14, C01G 41/02, C01G 31/02

(54) **NOUVEAU PROCEDE DE PREPARATION D'UN OXYDE, NOTAMMENT D'UN OXYDE DE METAL DE TRANSITION**
NEUES VERFAHREN ZUR HERSTELLUNG EINES OXIDS, INSBESONDERE VON ÜBERGANGSMETALLOXIDEN
NOVEL METHOD FOR PREPARING AN OXIDE, PARTICULARLY A TRANSITION METAL OXIDE

(30) Priorité: 17.02.1995 FR 9501874
(43) Date de publication de la demande: 05.02.1997
(73) Titulaire: RHODIA CHIMIE, 92408 Courbevoie Cédex (FR)
(72) Inventeur: GRENIER, Jean-Claude, F-33140 Cadaujac (FR); DOUMERC, Jean-Pierre, F-33170 Gradignan (FR); PETIT, Stéphane, F-63140 Chatel-Guyon (FR)
(74) Mandataire: Le Guen, Gérard
(86) Numéro de dépôt international: FR9600260
(87) Numéro de publication internationale: WO9625359

(56) Documents cités:
- US-A- 3 410 652
- US-A- 4 339 424
- US-A- 4 486 400
- DATABASE WPI Week 7711 Derwent Publications Ltd., London, GB; AN 77-19009y XP002001896 & JP,A,52 014 597 (NIPPON CHEM IND KK) , 3 Février 1977
- DATABASE WPI Week 8447 Derwent Publications Ltd., London, GB; AN 84-293792 XP002001897 & SU,A,1 084 327 (AS KAZA METAL CONC) , 7 Avril 1984

## Description

La présente invention concerne un procédé de préparation d'un oxyde.

Les oxydes minéraux et notamment les oxydes de métaux de transition sont utilisés en particulier dans le domaine de la catalyse hétérogène soit en tant que support inerte pour catalyseur, soit en tant que catalyseur à part entière. Leur structure cristalline est souvent mise à profit pour jouer le rôle d'un tamis moléculaire.

On peut citer par exemple, l'utilisation de zéolites qui développent une structure cristalline à canaux internes. Le contrôle de la taille des canaux donne accès à des catalyseurs spécifiques de substrats de taille donnée.

L'accès à des oxydes ayant généralement une structure cristalline ou une (nano)porosité contrôlée représente un enjeu important dans la mesure où l'on peut espérer élargir le champ des applications des composés connus.

Un procédé de préparation d'un oxyde de métal de transition avec une structure particulière est connu de US-A-4 339 424.

La présente invention a ainsi pour but de proposer une nouvelle voie d'accès à des oxydes, de structure ou de texture nouvelle ou modifiée, au moyen d'opérations simples mettant en oeuvre une chimie douce.

A cet effet, l'invention a pour objet un procédé de préparation d'un oxyde (P), selon lequel
(i) on forme un composé solide (O), par exemple cristallisé, à base d'un oxyde contenant des entités moléculaires (1), consistant en des ammoniums, diammoniums, diazane-iums ou diazane-diums, substitués ou non, réparties au sein du réseau du solide, puis
(ii) on élimine du solide (O) les entités (1) en faisant réagir le composé (O) en phase solide avec un courant gazeux comprenant à titre de réactif de décomposition des entités (1), un oxyde d'azote et l'on isole le solide (P) résultant.

L'entité (1) répond de préférence à l'une des formules (1a), (1b) et (1c) suivantes :

⁺NR¹R²R³R⁴ (1a)

⁺N₂R¹R²R³R⁴R⁵ (1b)

²⁺N₂R¹R²R³R⁴R⁵R⁶ (1c)

dans lesquelles R¹,R², R³, R⁴, R⁵, R⁶ identiques ou différents, représentent chacun un atome d'hydrogène ou un radical alkyle, cyclo-alkyle ou aryle, généralement en C₁-C₇.

L'entité moléculaire (1) peut être ainsi, par exemple, un ion ⁺NH₄, un ion ⁺N₂H₅ ou un ion ²⁺N₂H₆.

Sous l'action du réactif de décomposition, les entités moléculaires (1) sont transformées en produits de réaction qui peuvent être aisément éliminés du solide ayant réagi. On utilise un oxyde d'azote décomposant les entités (1) en composés légers ou volatils qui peuvent être entraînés par ledit courant gazeux.

Au cours de l'étape (ii), l'oxyde (O) est donc débarrassé des inclusions de formule (1), de sorte que l'oxyde résultant (P) isolé est au moins partiellement, de préférence totalement, exempt d'entités (1).

Selon la nature et la taille des radicaux qu'elle contient, l'entité (1) est plus ou moins volumineuse et l'inclusion de cette entité dans le composé (O) impose des paramètres structuraux qui sont fonction de cet encombrement. L'élimination par décomposition de l'entité (1) à partir de (O) laisse dans le réseau des volumes inoccupés plus ou moins importants.

Par le choix de l'entité (1) présente dans l'oxyde (O), on peut donc contrôler les caractéristiques de l'oxyde final (P).

Le procédé selon l'invention peut s'appliquer à la préparation d'un oxyde d'au moins un élément présentant une valence mixte.

Le procédé selon l'invention s'applique préférentiellement à la préparation d'un oxyde d'au moins un élément (E) choisi dans le groupe formé par les métaux vrais, les métaux de transition et les métalloïdes.

Par métaux vrais, on entend ici les métaux des groupes IA et IIA de la classification périodique des éléments. On peut ainsi notamment citer le sodium, le potassium, le rubidium, le magnésium, le calcium, le strontium.

Les lanthanides et les actinides, qui constituent les éléments de transition internes, sont contenus dans les métaux de transition tels que cités ci-dessus. On peut ainsi notamment citer, comme éléments de transition internes, le cérium, le praséodyme, le néodyme, le samarium, l'europium, le terbium, le dysprosium, le thulium, l'ytterbium, l'uranium, le neptunium, le plutonium.

Par métalloïdes, on entend en particulier les éléments du groupe IV B, tels que le silicium, l'étain, le plomb ; du groupe V B, tels que le phosphore, l'arsenic, l'antimoine, le bismuth ; du groupe VI B, tels que le soufre, le tellure ; du groupe VII B, tels que l'iode.

De manière avantageuse, le procédé selon l'invention s'applique à la préparation d'un oxyde d'au moins un métal de transition. Le métal de transition peut être quelconque et être ainsi choisi parmi les éléments des groupes III A, IV A, V A, VI A, VII A, VIII, I B et II B de la classification périodique des éléments.

Ce métal de transition peut être plus particulièrement choisi parmi le titane, le vanadium, le chrome, le manganèse, le fer, le cuivre, le molybdène, le tungstène, les lanthanides (tels que, notamment, le cérium, le praséodyme, le terbium).

Le procédé selon l'invention peut s'appliquer à la préparation d'un oxyde simple (c'est-à-dire un oxyde contenant un seul élément tel que mentionné précédemment) ou d'un oxyde mixte (c'est-à-dire un oxyde contenant plus d'un élément tel que mentionné précédemment).

L'entité moléculaire (1) est de préférence l'ion ammonium ⁺NH₄.

Comme réactif de décomposition, on utilise un oxyde d'azote (éventuellement en mélange avec de l'oxygène), tel que le monoxyde d'azote, le dioxyde d'azote ou un mélange d'entre eux.

On emploie avantageusement le dioxyde d'azote. Lors de l'étape (ii), l'entité (1) emprisonnée dans le réseau de (O) est alors décomposée en dégageant notamment de l'azote et de l'eau qui sont éliminés par le courant gazeux. Ainsi, la réaction de l'ion ammonium au sein d'un oxyde (O) avec du dioxyde d'azote suit l'équation suivante :

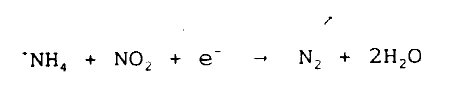

Cette réaction peut avoir lieu dans un vaste domaine de température, notamment de 15 à 500°C. Une partie de l'eau formée peut éventuellement rester présente dans le solide (P).

Selon un type d'arrangement des espèces dans l'oxyde (O), les entités (1) peuvent être liées à des atomes d'oxygène du réseau (par exemple cristallin) par liaison ionique. La structure de l'oxyde (O) est organisée autour des entités (1).

Un exemple simple de tel oxyde (O) est le vanadate d'ammonium de formule NH₄VO₃, qui est un sel d'ammonium dérivé de l'anhydride vanadique V₂O₅.

De préférence, les entités (1) contenues dans l'oxyde (O) sont intercalées dans le volume libre à l'intérieur d'une maille cristalline.

Avantageusement, l'oxyde (O) contient au moins un élément (E), notamment au moins un métal de transition, à plusieurs degrés d'oxydation différents et le nombre d'entités (1) est lié au nombre d'atomes d'éléments (E), notamment de métal de transition, de degré d'oxydation inférieur.

Dans ce cas, l'oxyde d'azote utilisé à titre de réactif de décomposition de l'entité (1) est avantageusement un réactif oxydant de sorte que la réaction de décomposition s'accompagne d'une oxydation de l'atome de l'élément (E), notamment de métal de transition. Conviennent notamment à titre d'oxyde d'azote (éventuellement en mélange avec de l'oxygène), le monoxyde d'azote, le dioxyde d'azote ou un mélange d'entre eux. De préférence, on utilise le dioxyde d'azote NO₂.

Dans l'oxyde final (P), l'élément (E), notamment le métal de transition a alors un degré d'oxydation qui correspond à un degré d'oxydation supérieur ou maximal dudit élément, notamment dudit métal, dans l'oxyde (O).

De tels oxydes (O) peuvent être préparés par réaction d'un oxyde (N) d'élément (E), notamment de métal de transition avec un agent réducteur, en présence d'une source d'entités (1), notamment d'un sel d'entités (1).

En variante, l'oxyde (O) peut être préparé par réaction d'un oxyde (N) d'élément (E), notamment de métal de transition, qui contient des entités (1) liées à des atomes d'oxygène du réseau par liaison ionique, avec un agent réducteur. L'oxyde (N) joue alors le rôle de source d'entités (1). Le réseau d'atomes d'oxygène et d'élément (E), notamment de métal, de (N) se réorganise en particulier au niveau des entités (1). On peut bien sûr utiliser en complément une source "externe" d'entités (1), notamment un sel d'entités (1).

L'agent réducteur peut être de tout type connu. On utilise de préférence l'hydrogène gazeux (dilué ou non dans un gaz inerte tel que l'argon), un borohydrure de métal alcalin, notamment de sodium, ou bien un métal plus réducteur que l'élément (E) à réduire, notamment le métal de transition à réduire, par exemple le zinc.

La présente invention a plus particulièrement pour objet un procédé de préparation d'oxyde de tungstène dans lequel
(i) on met du para-tungstate d'ammonium (NH₄)₁₀W₁₂O₄₁.5H₂O en présence d'un agent réducteur tel que décrit précédemment pour préparer un oxyde de tungstène intermédiaire de formule (2) (NH₄)ₓWO₃ où x est un nombre réel de 0,06 à 0,33, en particulier de 0,11 à 0,15, puis
(ii) on fait réagir l'oxyde intermédiaire de formule (2) en phase solide avec un courant de dioxyde d'azote gazeux à une température de 15 à 500°C, en particulier de 100 à 400°C, et l'on isole le solide résultant.

Le solide résultant isolé est un oxyde de tungstène de formule WO₃ dans une forme métastable qui cristallise dans le système hexagonal, comme l'oxyde intermédiaire (NH₄)ₓWO₃, avec un très bon degré de cristallinité.

Un autre objet de la présente invention est un procédé de préparation d'oxyde de vanadium dans lequel
(i) on met de l'anhydride vanadique V₂O₅ en présence d'un agent réducteur tel que décrit précédemment et d'un halogénure d'ammonium pour préparer un oxyde de vanadium intermédiaire de formule (3) (NH₄)₂V₃O₈, puis
(ii) on fait réagir l'oxyde intermédiaire de formule (3) en phase solide avec un courant de dioxyde d'azote gazeux à une température comprise entre 15 et 500°C, et l'on isole le solide résultant.

L'agent réducteur utilisé à l'étape (i) peut être avantageusement un métal très réducteur, tel que le zinc. La réaction a lieu de préférence en solution aqueuse au reflux en présence de chlorure d'ammonium en large excès, en tant que source d'ions ammonium.

En variante on peut avantageusement utiliser comme agent réducteur un borohydrure tel que le borohydrure de sodium. La réaction a lieu de préférence en solution aqueuse à température ambiante (notamment 15 à 25°C).

Notamment lorsque la température à laquelle est effectuée l'étape (ii) est peu importante, en particulier comprise entre 15 et 25°C, l'oxyde de vanadium de formule V₂O₅ préparé (et ce sans passage par une phase liquide), est amorphe et, au moins partiellement, hydraté.

Les oxydes (P) de structure particulière obtenus selon la présente invention par élimination d'entités relativement volumineuses à partir d'une certaine structure par réaction solide/gaz présentent des structures ouvertes et aérées. Lorsque l'oxyde (P) est un solide cristallin, sa structure cristalline ouverte peut s'organiser en formant des canaux ou bien des structures lamellaires.

De telles structures ouvertes trouvent une application notamment dans le domaine de la catalyse hétérogène, en particulier pour l'oxydation ménagée des hydrocarbures ou la réduction des oxydes d'azote.

La structure des oxydes préparés par le procédé selon l'invention est habituellement favorable à l'intercalation de cations notamment monovalents comme H⁺, Li⁺, Ag⁺, Na⁺, Cu⁺.

Les oxydes préparés par le procédé selon l'invention peuvent aussi être avantageusement employés dans les domaines du stockage d'énergie (les batteries rechargeables notamment), des conducteurs ioniques, des pigments inorganiques et de l'électrochromisme.

L'invention sera mieux comprise à l'aide des exemples illustratifs suivants :

### Exemple 1

### a) Préparation d'oxyde de tungstène à ions ammonium intercalés (NH₄)ₓWO₃ (1a).

10 g de para-tungstate d'ammonium pentahydraté de formule (NH₄)₁₀W₁₂O₄₁.5H₂O sont placés dans un four sous courant d'un mélange réducteur argon-hydrogène à 10% d'hydrogène.

La température dans le four est élevée de 2,5°C par minute jusqu'à 350°C. Cette température est maintenue pendant 24 h, puis le four est arrêté. La température chute lentement jusqu'à la température ambiante en 3 à 4 heures.

La circulation de courant de gaz réducteur est alors interrompue.

On obtient un produit sous forme d'une poudre fine de couleur bleue foncée avec des reflets métalliques, qui provient de la présence de valences mixtes W⁵⁺ et W⁶⁺ apparues lors de la réduction du composé de départ.

Le produit est caractérisé par diffraction des rayons X et microscopie électronique et l'on vérifie que le produit est sous forme de cristaux cristallisant dans le système hexagonal. Les paramètres cristallins sont reportés dans le tableau 1.

L'analyse du produit par RMN du proton, par spectrométrie de masse et par analyse thermo-gravimétrique, montre que le produit répond à la formule (NH₄)ₓWO₃ avec x compris entre 0,06 et 0,33.

### b) Oxydation de (NH₄)ₓWO₃ par NO₂ pour préparer l'oxyde (1b)

Le produit de l'étape (a) est placé sur un fritté démontable dans un tube en verre muni à une extrémité d'une arrivée de gaz NO₂ et à l'autre extrémité d'une sortie de gaz débouchant sous la surface d'un liquide destiné à neutraliser les oxydes sous-produits et l'oxyde NO₂ n'ayant pas réagi.

Un four calorifugé amovible est mis en place autour du tube au niveau du fritté. Ce four est commandé par un thermocouple mesurant la température à l'intérieur du tube en verre au niveau du fritté.

Le courant de dioxyde gazeux peut provenir d'une bouteille commerciale ou être produit par exemple par décomposition de Pb(NO₃)₂ à 250°C en amont du tube réacteur.

La température du four est réglée à 225°C et évolue entre 225 et 260°C pendant 3h30 minutes de réaction. Le produit obtenu est de couleur jaune-vert. Il est analysé de la même façon que l'oxyde (1a) pour déterminer sa formule et sa cristallinité.

Le produit cristallise dans le système hexagonal avec un très bon degré de cristallinité. On mesure par diffraction des rayons X que les paramètres cristallin de l'oxyde (1b), reportés dans le tableau 1, sont plus grands que ceux de l'oxyde (1a).

La formule de (1b) est du type WO₃.yH₂O. Une partie de l'eau d'hydratation peut provenir de l'eau libérée par la réaction d'oxydation par NO₂. L'autre partie peut provenir de l'atmosphère ambiante. Selon le temps d'exposition à l'air, y peut varier de 0,01 à 0,10.

L'oxyde (1b) est un oxyde de tungstène de forme métastable. Il s'hydrate en présence d'air mais reste sous sa forme hexagonale jusqu'à 505°C.

La structure hexagonale de cet oxyde présente des canaux structuraux de l'ordre de 3 à 5 Å de diamètre, qui permettent d'y accueillir des molécules d'eau.

La structure hexagonale se transforme de manière irréversible en structure monoclinique normale, à l'air à partir de 505°C.

### Exemple 2

Le protocole en 2 étapes de l'exemple 1 a été répété avec les modifications opératoires suivantes :
Etape a : 10g de para-tungstate d'ammonium pentahydraté sont placés dans un four. La température du four est élevée à 350°C, à la vitesse maximale de montée en température du four.

Un courant de mélange réducteur d'argon et d'hydrogène à 10% d'hydrogène est alors installé dans le four à 350°C pendant 8 heures puis le four est arrêté.

Les paramètres cristallins de l'oxyde (2a) (NH₄)ₓWO₃ sont indiqués dans le tableau 1.
Etape b : Le four est régulé à une température entre 250 et 270°C et la réaction sous courant de NO₂ a lieu pendant 2 h 15.

Le produit obtenu est de couleur jaune.

Les paramètres cristallins sont indiqués dans le tableau 1.

**TABLEAU 1**

| Exemple | Paramètres de l'oxyde obtenu à l'étape (a) | | | Paramètres de l'oxyde obtenu à l'étape (b) | | |
|---|---|---|---|---|---|---|
| | a(Å) | c(Å) | V(Å³)⁽¹⁾ | a(Å) | c(Å) | V(Å³) |
| 1 | 7,317 | 7,45 | 345,45 | 14,680 | 7,641 | 1 426 |
| 2 | 7,311 | 7,472 | 345,95 | 14,690 | 7,650 | 1 430 |

| | | | | | | |
|---|---|---|---|---|---|---|
| 1) V désigne le volume de la maille cristalline. | | | | | | |

L'élimination en (b) des ions ⁺NH₄ emprisonnés dans le réseau de l'oxyde produit à l'étape (a) se fait avec une augmentation des paramètres cristallins.

La présence de canaux dans la structure hexagonale de l'oxyde préparé permet de l'utiliser dans les applications usuelles des zéolithes, qui présentent une structure analogue, comme tamis moléculaire par adsorption de molécules de petite taille dans la porosité du matériau ou comme support d'éléments, par échange d'éléments chimiques, tels que des ions métalliques, à l'intérieur des canaux.

Ce type structural est notamment favorable à l'intercalation de cations monovalents comme H⁺, Li⁺, Ag⁺, Na⁺ ou Cu⁺.

L'oxyde préparé peut aussi être avantageusement employé dans les matériaux électrochromes.

### Exemple 3

### a) Préparation de (NH₄)₂V₃O₈ par réduction de V₂O₅ en présence d'ions ⁺NH₄

A 1 g de V₂O₅ en solution aqueuse, on ajoute 290 mg de poudre de zinc en présence d'un excès de chlorure d'ammonium NH₄Cl (15 g). La réaction a lieu pendant 3 jours au reflux de l'eau.

On détermine par diffraction des rayons X et analyse thermo-gravimétrique (ATG) que le produit a pour formule (NH₄)₂V₃O₈.

Une autre variante de préparation de (NH₄)₂V₃O₈ est la suivante :

A 1 g de V₂O₅ en solution aqueuse, on ajoute un excès de chlorure d'ammonium NH₄Cl (10 g) et 18 mg de borohydrure de sodium NaBH₄. La réaction a lieu pendant 3 heures à température ambiante.

Le produit obtenu est caractérisé par diffraction des rayons X et l'on vérifie que le produit cristallise en phase quadratique avec des paramètres proches de ceux rapportés dans la littérature.

### b) Oxydation de (NH₄)₂V₃O₈ par NO₂.

Le produit de l'étape (a) est traité par NO₂ dans le même appareillage que celui décrit précédemment.

La température de réaction est de 170°C et la réaction sous courant de NO₂ a lieu pendant 1h15. On obtient un produit de couleur brun orangé qui est caractérisé par diffraction des rayons X et par ATG.

Il s'agit d'anhydride vanadique V₂O₅ cristallisé dans le système orthorhombique. Les paramètres cristallins sont reportés dans le tableau 2, où l'on présente également les paramètres d'un oxyde V₂O₅ commercial (référence).

### Exemple 4

L'exemple 3 est répété en effectuant l'étape (b) à une température de 20°C pendant 2 h. On obtient cette fois un produit de couleur ocre, amorphe aussi bien aux rayons X qu'à la microdiffraction électronique, et hydraté.

L'élimination des inclusions de ⁺NH₄ à température ambiante (exemple 4) provoque "l'explosion" du réseau cristallin, alors qu'à une température plus importante telle que 170°C (exemple 3), une recristallisation permet de restructurer l'oxyde V₂O₅.

Ce procédé de préparation (sans passage par une phase liquide) de nouveaux oxydes de V₂O₅ amorphes, hydratés au moins partiellement, permet également de générer de nouvelles entités réactives qui trouvent des applications dans les domaines de la catalyse hétérogène.

Ils peuvent également servir à la réalisation d'électrodes positives dans les batteries au lithium rechargeables.

**TABLEAU 2**

| Oxyde | Paramètres cristallins | | | |
|---|---|---|---|---|
| | a(Å) | b(Å) | c(Å) | V(Å³) |
| Réf. | 11,539 | 3,569 | 4,387 | 180,65 |
| Ex. 3 | 11,529 | 3,567 | 4,380 | 180,12 |
| Ex. 4 | - | - | - | - |

## Revendications

1. Procédé de préparation d'un oxyde (P), selon lequel :
(i) on forme un composé solide (O) à base d'un oxyde contenant des entités moléculaires (1) consistant en des ammoniums, diammoniums, diazane-iums ou diazane-diums, substitués ou non, lesdites entités étant réparties au sein du réseau du solide, puis
(ii) on élimine du solide (O) les entités (1) en faisant réagir le composé (O) en phase solide avec un courant gazeux comprenant à titre de réactif de décomposition des entités (1), un oxyde d'azote et l'on isole le solide (P) résultant.

2. Procédé selon la revendication 1, pour préparer un oxyde (P) d'au moins un élément présentant une valence mixte.

3. Procédé selon la revendication 1 ou 2, pour préparer un oxyde (P) d'au moins un élément (E) choisi dans le groupe formé par les métaux vrais, les métaux de transition et les métalloïdes.

4. Procédé selon l'une quelconque des revendications 1 à 3, pour préparer un oxyde (P) d'au moins un métal de transition.

5. Procédé selon la revendication 4, dans lequel le métal de transition est choisi parmi le titane, le vanadium, le chrome, le manganèse, le fer, le cuivre, le molybdène, le tungstène et les lanthanides.

6. Procédé selon l'une quelconque des revendications 1 à 5, dans lequel les entités (1) contenues dans le composé (O) répondent à l'une des formules (1a), (1b) et (lc) suivantes :
⁺NR¹R²R³R⁴ (1a)
⁺N₂R¹R²R³R⁴R⁵ (1b)
²⁺N₂R¹R²R³R⁴R⁵R⁶ (1c)
dans lesquelles R¹, R², R³, R⁴, R⁵, R⁶ identiques ou différents, représentent chacun un atome d'hydrogène ou un radical alkyle, cyclo-alkyle ou aryle.

7. Procédé selon l'une quelconque des revendications 1 à 6, dans lequel les entités (1) contenues dans le composé (O) sont des ions ⁺NH₄, ⁺N₂H₅ ou ²⁺N₂H₆.

8. Procédé selon l'une quelconque des revendications 1 à 7, dans lequel l'oxyde d'azote de l'étape (ii) est du dioxyde d'azote.

9. Procédé selon l'une quelconque des revendications 1 à 8, dans lequel on forme à l'étape (i) un composé (O) contenant des entités (1) liées par des liaisons ioniques à des atomes d'oxygène du réseau.

10. Procédé selon l'une quelconque des revendications 1 à 9, dans lequel on forme à l'étape (i) un composé (O) contenant un élément à plusieurs degrés d'oxydation différents, le nombre d'entités (1) étant lié au nombre d'atomes dudit élément de degré d'oxydation inférieur, et lesdites entités (1) étant intercalées dans le volume libre à l'intérieur d'une maille cristalline.

11. Procédé selon la revendication 10, dans lequel, à l'étape (i), on fait réagir un oxyde (N) dudit élément avec un agent réducteur, en présence d'une source d'entités (1) notamment un sel d'entités (1).

12. Procédé selon la revendication 10, dans lequel, à l'étape (i), on fait réagir un oxyde (N) dudit élément qui contient des entités (1) liées à des atomes d'oxygène du réseau par des liaisons ioniques, avec un agent réducteur.

13. Procédé selon la revendication 11 ou 12, dans lequel ledit agent réducteur est choisi parmi l'hydrogène gazeux, le zinc ou un borohydrure de métal alcalin.

14. Procédé de préparation d'oxyde de tungstène selon la revendication 1, dans lequel
(i) on met du para-tungstate d'ammonium (NH₄)₁₀W₁₂O₄₁.5H₂O en présence d'un agent réducteur, en particulier de l'hydrogène gazeux, pour préparer un oxyde de tungstène intermédiaire de formule (2) (NH₄)ₓWO₃ où x est un nombre réel de 0,06 à 0,33, en particulier de 0,11 à 0,15, puis
(ii) on fait réagir l'oxyde intermédiaire de formule (2) en phase solide avec un courant de dioxyde d'azote gazeux à une température de 15 à 500°C, en particulier de 100 à 400°C, et l'on isole le solide résultant.

15. Procédé de préparation d'oxyde de vanadium selon la revendication 1, dans lequel
(i) on met de l'anhydride vanadique V₂O₅ en présence d'un agent réducteur, en particulier du zinc ou un borohydrure de métal alcalin, et d'un halogénure d'ammonium pour préparer un oxyde de vanadium intermédiaire de formule (3) (NH₄)₂V₃O₈, puis
(ii) on fait réagir l'oxyde intermédiaire de formule (3) en phase solide avec un courant de dioxyde d'azote gazeux à une température comprise entre 15 et 500°C, et l'on isole le solide résultant.

## Patentansprüche

1. Verfahren zur Herstellung eines Oxids (P), nach dem man:
(i) eine feste Verbindung (O) auf Oxidbasis bildet, die molekulare Einheiten (1) enthält, die aus Ammonium, Diammonium, Diazanium oder Diazandium bestehen, substituiert oder nicht, wobei diese Einheiten im Gitter des Feststoffs verteilt sind, und anschließend
(ii) aus dem Feststoff (O) die Einheiten (1) eliminiert, indem man die Verbindung (O) in fester Phase mit einem Gasstrom reagieren läßt, der als Reagenz zur Zersetzung der Einheiten (1) ein Stickstoffoxid umfaßt, und den resultierenden Feststoff (P) isoliert.

2. Verfahren nach Anspruch 1 zur Herstellung eines Oxids (P) von mindestens einem Element, das eine Mischvalenz aufweist.

3. Verfahren nach Anspruch 1 oder 2 zur Herstellung eines Oxids (P) von mindestens einem Element (E), das ausgewählt wird aus der aus dcn eigentlichen Metallen, den Übergangsmetallen und den Metalloiden gebildeten Gruppe.

4. Verfahren nach einem der Ansprüche 1 bis 3 zur Herstellung eines Oxids (P) von mindestens einem Übergangsmetall.

5. Verfahren nach Anspruch 4, wobei das Übergangsmetall ausgewählt wird aus Titan, Vanadium, Chrom, Mangan, Eisen, Kupfer, Molybdän, Wolfram und den Lanthaniden.

6. Verfahren nach einem der Ansprüche 1 bis 5, wobei die in der Verbindung (O) enthaltenden Einheiten (1) einer der folgenden Formeln (1a), (1b) und (1c) entsprechen;
^{⊕}NR¹R²R³R⁴ (1a)
^{⊕}N₂R¹R²R³R⁴R⁵ (1b)
^{2⊕}N₂R¹R²R³R⁴R⁵R⁶ (1c)
wobei R¹, R², R³, R⁴, R⁵, R⁶, identisch oder verschieden, jeweils ein Wasserstoffatom oder ein Alkyl-, Cycloalkyl- oder Arylradikal darstellen.

7. Verfahren nach einem der Ansprüche 1 bis 6, wobei die in der Verbindung (O) enthaltenen Einheiten (1) ^{⊕}NH₄, ^{⊕}N₂H₅ oder ^{2⊕}N₂H₆ sind.

8. Verfahren nach einem der Ansprüche 1 bis 7, wobei das Stickstoffoxid des Schritts (ii) Stickstoffdioxid ist.

9. Verfahren nach einem der Ansprüche 1 bis 8, wobei man in Schritt (i) eine Verbindung (O) bildet, die Einheiten (1) enthält, welche durch ionische Bindungen an Sauerstoffatome des Gitters gebunden sind.

10. Verfahren nach einem der Ansprüche 1 bis 9, wobei man in Schritt (i) eine Verbindung (O) bildet, die ein Element mit mehreren verschiedenen Oxidationsstufen enthält, wobei die Anzahl der Einheiten (1) verbunden ist mit der Anzahl der Atome dieses Elements mit der niedrigeren Oxidationsstufe, und wobei die Einheiten (1) in das freie Volumen im Inneren einer Elementarzelle eingeschoben sind.

11. Verfahren nach Anspruch 10, wobei man in Schritt (i) ein Oxid (N) dieses Elements mit einem Reduktionsmittel in Gegenwart einer Quelle der Einheiten (1) reagieren läßt, insbesondere mit einem Salz der Einheiten (1).

12. Verfahren nach Anspruch 10, wobei man in Schritt (1) mit einem Reduktionsmittel ein Oxid (N) des Elements reagieren läßt, das Einheiten (1) enthält, die an Sauerstoffatome des Gitters durch ionische Bindungen gebunden sind.

13. Verfahren nach Anspruch 11 oder 12, wobei das Reduktionsmittel ausgewählt wird aus gasförmigen Wasserstoff, Zink oder einem Alkalimetall-Borhydrid.

14. Verfahren zur Herstellung von Wolframoxid nach Anspruch 1, wobei man
(i) Ammonium-para-wolframat (NH₄)₁₀W₁₂O₄₁·5H₂O in Gegenwart eines Reduktionsmittels, insbesondere von gasförmigem Wasserstoff bringt zur Herstellung eines Zwischenprodukt-Wolframoxids der Formel (2) (NH₄)ₓWO₃, wobei x eine reelle Zahl von 0,06 bis 0,33 ist, insbesondere von 0,11 bis 0,15, und man anschließend
(ii) das Zwischenprodukt-Oxid der Formel (2) in fester Phase mit einem Strom von gasförmigem Stickstoffdioxid bei einer Temperatur von 15 bis 500°C, insbesondere 100 bis 400°C reagieren läßt und den resultierenden Feststoff isoliert.

15. Verfahren zur Herstellung von Vanadiumoxid nach Anspruch 1, wobei man
(i) Vanadiumanhydrid V₂O₅ in Gegenwart eines Reduktionsmittel, insbesondere Zink oder Alkalimetall-Borhydrid und eines Ammoniumhalogenids bringt zur Herstellung eines Zwischenprodukt-Vanadiumoxids der Formel (3) (NH₄)₂V₃O₈ und man anschließend
(ii) das Zwischenprodukt-Oxid der Formel (3) in fester Phase mit einem Strom von gasförmigem Stickstoffdioxid bei einem Temperatur zwischen 15 und 500°C reagieren läßt und den resultierenden Feststoff isoliert.

## Claims

1. Process for preparing an oxide (P), in which: (i) a solid compound (O) based on an oxide containing molecular species (1) consisting of substituted or unsubstituted ammoniums, diammoniums, diazaniums or diazanediums is formed, the said species being distributed within the network of the solid, and then (ii) the species (1) are removed from the solid (O) by reacting the compound (O) in solid phase with a gaseous stream comprising a nitrogen oxide as a reagent for decomposing the species (1), and the resulting solid (P) is isolated.

2. Process according to claim 1, for preparing an oxide (P) of at least one element of mixed valency.

3. Process according to claim 1 or 2, for preparing an oxide (P) of at least one element (E) chosen from the group formed by true metals, transition metals and metalloids.

4. Process according to any one of claims 1 to 3, for preparing an oxide (P) of at least one transition metal.

5. Process according to claim 4, in which the transition metal is chosen from titanium, vanadium, chromium, manganese, iron, copper, molybdenum, tungsten and lanthanides.

6. Process according to any one of claims 1 to 5, in which the species (1) contained in the compound (O) correspond to one of the formulae (1a), (1b) and (1c) below:
⁺NR¹R²R³R⁴ (1a)
⁺N₂R¹R²R³R⁴R⁵ (1b)
²⁺N₂R¹R²R³R⁴R⁵R⁶ (1c)
in which R¹, R², R³, R⁴, R⁵ and R⁶, which may be identical or different, each represent a hydrogen atom or an alkyl, cycloalkyl or aryl radical.

7. Process according to any one of claims 1 to 6, in which the species (1) contained in the compound (O) are NH₄⁺, N₂H₅⁺ or N₂H₆²⁺ ions.

8. Process according to any one of claims 1 to 7, in which the nitrogen oxide in step (ii) is nitrogen dioxide.

9. Process according to any one of claims 1 to 8, in which, in step (i), a compound (O) is formed containing species (1) linked via ionic bonds to oxygen atoms of the network.

10. Process according to any one of claims 1 to 9, in which, in step (i), a compound (0) is formed containing an element in several different oxidation state, the number of species (1) being linked to the number of atoms of the said element of lower oxidation state, and the said species (1) being intercalated in the free volume inside a crystal lattice.

11. Process according to claim 10, in which, in step (i), an oxide (N) of the said element is reacted with a reducing agent, in the presence of a source of species (1), in particular a salt of species (1).

12. Process according to claim 10, in which, in step (i), an oxide (N) of the said element which contains species (1) linked to oxygen atoms of the network via ionic bonds, is reacted with a reducing agent.

13. Process according to claim 11 or 12, in which the said reducing agent is chosen from hydrogen gas, zinc or an alkali metal borohydride.

14. Process for preparing a tungsten oxide according to claim 1, in which
(i) ammonium para-tungstate (NH₄)₁₀W₁₂O₄₁·5H₂O is placed in the presence of a reducing agent, in particular hydrogen gas, in order to prepare an intermediate tungsten oxide of formula (2) (NH₄)ₓWO₃ in which x is a real number from 0.06 to 0.33, in particular from 0.11 to 0.15, and then
(ii) the intermediate oxide of formula (2) is reacted, in solid phase, with a stream of nitrogen dioxide gas at a temperature of from 15 to 500°C, in particular from 100 to 400°C, and the resulting solid is isolated.

15. Process for preparing vanadium oxide according to claim 1, in which
(i) vanadium pentoxide V₂O₅ is placed in the presence of a reducing agent, in particular zinc or an alkali metal borohydride, and an ammonium halide, in order to prepare an intermediate vanadium oxide of formula (3) (NH₄)₂V₃O₈, and then
(ii) the intermediate oxide of formula (3) is reacted, in solid phase, with a stream of nitrogen dioxide gas at a temperature of between 15 and 500°C, and the resulting solid is isolated.
